Europäisches Patentamt

European Patent Office

Office européen des brevets

(11) Veröffentlichungsnummer : **0 003 730**
**B1**

(12) **EUROPÄISCHE PATENTSCHRIFT**

(45) Veröffentlichungstag der Patentschrift :
21.01.81

(51) Int. Cl.³ : **A 01 K 31/08**, B 65 D 6/24

(21) Anmeldenummer : **78101162.2**

(22) Anmeldetag : **16.10.78**

(54) **Zerlegbarer Vogelkäfig.**

(30) Priorität : **11.02.78 DE 2805866**

(43) Veröffentlichungstag der Anmeldung :
**05.09.79 (Patentblatt 79/18)**

(45) Bekanntmachung des Hinweises auf die Patenterteilung : **21.01.81 Patentblatt 81/03**

(84) Benannte Vertragsstaaten :
**BE CH FR GB LU NL SE**

(56) Entgegenhaltungen :
**DE - A - 2 551 079**
**DE - C - 888 073**
**FR - A - 2 192 762**
**GB - A - 723 071**
**US - A - 3 683 857**

(73) Patentinhaber : **Josef Voss Duett-Werk**
**Cäcilienstrasse 11-15**
**D-5760 Arnsberg 1 (DE)**

(72) Erfinder : **Voss, Josef**
**Zu den Schrebergärten 4**
**D-5760 Arnsberg 1 (DE)**

(74) Vertreter : **Fritz, Herbert, Dipl.-Ing.**
**Mühlenberg 74**
**D-5760 Arnsberg 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

Zerlegbarer Vogelkäfig

Die Erfindung bezieht sich auf einen zerlegbaren Vogelkäfig mit einem Drahtgitterteil, einem Kunststoffdach und einer Kunststoffbodenschale als Einzelteile. Die Einzelteile sind mit Hilfe von benutzerseitig montierbaren Verbindungselementen in eine Gebrauchsanordnung montierbar, in welcher der Raum des Gitterteiles unten und oben durch die Bodenschale beziehungsweise das Dach wesentlich vergrößert wird. Als Widerlager des Drahtgitterteiles sind am Dach und an der Schale randseitig jeweils Absätze geformt. Während der Grundriß des Drahtgitterteiles über die Höhe gleichbleibend ist, nehmen die Grundriße von Dach und Schale nach oben beziehungsweise unten ab. Die Einzelteile können für den Versand in eine raumsparende Anordnung gebracht werden.

Da Vogelkäfige gebrauchsfertig relativ viel Raum in Anspruch nehmen hat die Zerlegbarkeit der Einzelteile und die raumsparende Anordnung derselben für Hersteller und Händler eine besondere wirtschaftliche Bedeutung, im Hinblick auf das Einsparen von Lagerraum und Verpackungsmaterial.

Ein bekannter zerlegbarer Vogelkäfig der eingangs genannten Art (US-A-3 683 857) besteht aus einem Drahtgitterteil mit quadratischem Grundriß, aus einem Dach, etwa von der Form einer Pyramide, aus einer Schale, etwa von der Form eines Pyramidenstumpfes und aus einer gleichen zweiten Schale, die als Fuß und an die andere Schale angebracht ist. Für die Verbindung des Drahtgitterteiles mit dem Dach beziehungsweise mit der obersten der Schalen sind Eckdrähte des Drahtgitterteiles vorgesehen an deren Enden Gewinde geschnitten sind. Diese Enden werden durch Löcher in den Absätzen von Dach beziehungsweise Schale gesteckt ; durch Aufschrauben von Muttern auf die Gewinde wird jeweils die Verbindung gesichert. Im Bereich der Eckstäbe sind die Wände des Drahtgitterteiles gelenkig miteinander verbunden, so daß das Drahtgitterteil einzeln flach und somit raumsparend zusammengeklappt werden kann. Um die Kunststoffteile möglichst raumsparend für den Versand anzuordnen werden sie ineinandergesteckt. Das Prinzip der raumsparenden Anordnung bei diesem bekannten Käfig setzt einen eckigen Grundriß voraus, Gelenkverbindung der Drahtgitterwände und eine etwa gleiche Form der Kunststoffteile.

Es ist weiterhin bekannt (DE-U-76 08 125) das Kunststoffgitterteil eines Vogelkäfigs umgekehrt in die zugehörige Bodenschale einzusetzen, damit die Höhe des zur Verpackung dienenden Kartons geringer wird, als wenn die genannten Teile funktionsgerecht zusammengesetzt sind. Der Karton muß jedoch so beschaffen sein, daß die hochempfindliche Bodenschale in ausreichendem Maße geschützt ist. Die Erfindungsaufgabe ist ein Vogelkäfig der eingangs genannten Art, dessen Einzelteile für die Lagerung und den Versand in eine bruchsichere, raumsparende Anordnung gebracht werden können, wobei jedoch der konstruktive Aufwand und die Beschränkung hinsichtlich der Gestaltung geringer als bei dem beschriebenen Stand der Technik sind.

Die Lösung dieser Aufgabe besteht in einer Kombination der Merkmale nach dem Patentanspruch.

Einzelmerkmale der Kombination wie zum Beispiel die horizontalen Abschlußdrähte des Drahtgitterteiles oder der an der Kunststoffschale geformter Absatz, der als Widerlager für das Drahtgitterteil dient, sind an sich bei Vogelkäfigen oder Zubehörteilen bekannt (GB-A-723 071, DE-U-17 60 428). Es besteht jedoch bei den genannten Entgegenhaltungen zwischen diesen Einzelmerkmalen und einer raumsparenden Anordnung der Käfigteile keinerlei Zusammenhang.

Die Einzelteile eines Käfigs nach der Erfindung werden nach ihrer Herstellung verpackungsgerecht zusammengesetzt. Die Schale wird umgekehrt auf eine Unterlage gesetzt, das Gitterteil darauf gestülpt bis ein Abschlußdraht in Bodennähe auf dem Schalenrand aufliegt. Dann wird das umgekehrte Dach in das Gitterteil bis zur Anlage das Dachabsatzes am oberen Abschlußdraht eingesetzt. Alle drei Einzelteile sind dabei nicht höher als das Gitterteil, das die Schale und das Dach nahezu vollständig aufnimmt und diese Teile auch gegen Schlag und Stoß schützt. Ein Gitterteil mit einer Höhe von 30 cm kann eine Schale mit 10 cm Höhe und ein Dach mit nahezu 20 cm Höhe aufnehmen. Wenn im Schalenboden eine offene Tülle gebildet ist, dann kann diese die Spitze eines Daches aufnehmen, das insgesamt noch höher als 20 cm ist. In der verpackungsgerechten Anordnung der Einzelteile kann mehr als die Hälfte der Nutzhöhe des Käfigs eingespart werden.

In der Transportanordnung werden Schale und Dach jeweils formschlüssig am Gitterteil gehalten, das heißt, sie werden durch den Anschlag der Schalenwand bzw. der Dachwand am Begrenzungsdraht im wesentlichen achsgleich gehalten. Da die Lage der Einzelteile fixiert ist, ergibt sich eine formstabile Einheit, an der sich leicht Papierumhüllung anbringen läßt. Die Teile lassen sich in dieser Form aber auch ohne Papierumhüllung innerbetrieblich transportieren und stapeln. Auch in diesem Fall sind Schale und Dach als Kunststoffteile durch den Schutz des Drahtgitters bruchsicher. Zubehörteile lassen sich in dem durch das Dach gebildeten Raum unterbringen.

Im folgenden wird ein Ausführungsbeispiel der Erfindung näher beschrieben unter Bezugnahme auf die beiliegenden Zeichnungen.

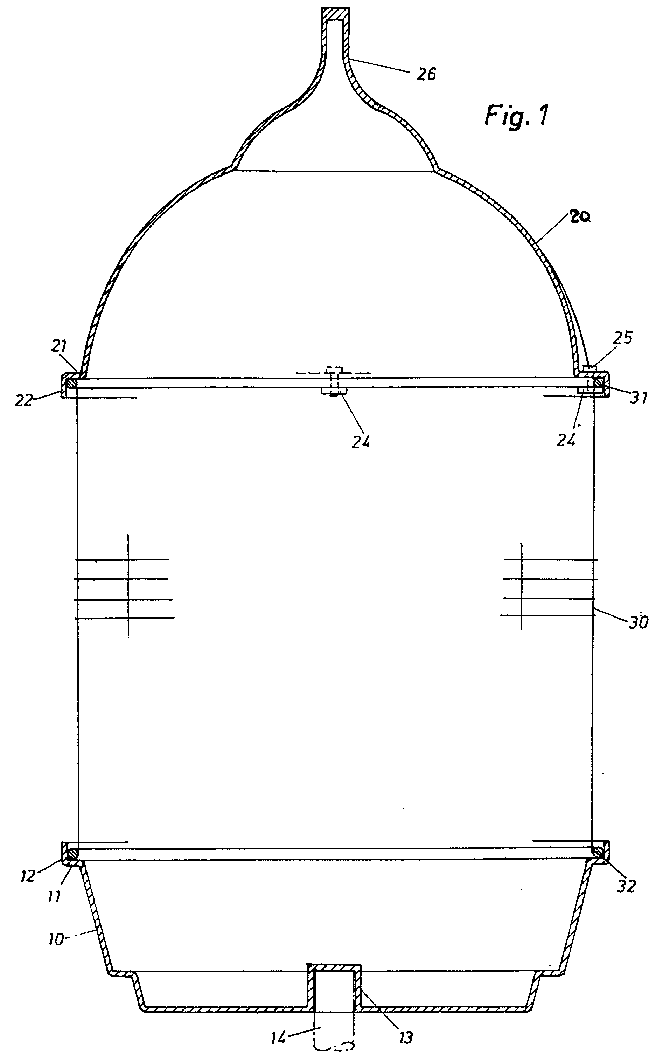

Fig. 1 zeigt einen Vogelkäfig nach der Erfindung im Gebrauchszustand, lotrecht geschnitten.

Fig. 2 stellt den gleichen Schnitt durch die Einzelteile in ihrer verpackungsgerechten Verbindung dar.

Fig. 3 zeigt mehrere Käfige nach der Erfindung gestapelt.

Der Käfig nach dem Ausführungsbeispiel ist im Grundriß kreisrund, was jedoch keine Bedingung der Erfindung ist. Danach könnte er ebenso gut einen beliebigen anderen Grundriß haben.

Ein Käfig nach der Erfindung besteht aus drei Einzelteilen, nämlich einer Schale 10 aus Kunststoff, einem Gitterteil 30 aus Metalldrähten und einem kuppelförmigen Dach 20 ebenfalls aus Kunststoff.

In Variierung des Ausführungsbeispieles könnte das Gitterteil 30 auch einheitlich als Kunststoff-Formteil hergestellt sein oder das Dach 20 könnte aus Metalldrähten bestehen. Anstatt eines kuppelförmigen Daches könnte auch ein kastenförmiges Dach Anwendung finden.

Bei dem Ausführungsbeispiel ist die Höhe der Schale 10 etwa 10 cm, die Höhe des Daches 20 mit einer Spitze 26 etwa 24 cm und die Höhe des Gitterteiles 30 etwa 30 cm. Die Erfindung ist jedoch nicht auf diese Maße beschränkt.

Die Schale 10 ist so ausgebildet, daß sie an einem Ständer 14 angebracht werden kann. Zu diesem Zweck ist am Boden der Schale 10 eine offene Tülle 13 angeformt zum Aufsetzen auf das obere Ende des Ständers 14.

Am Randbereich der Schale 10 ist im Anschluß an die Schalenwand, nach außen gerichtet, ein ebener Absatz 11 angeformt. An diesem schließt sich ein zum Gitterteil 30 hin gerichteter zylindrischer Rand 12 an. Wenn Schale 10 und Gitterteil 30 gebrauchsfertig zusammengesetzt sind, dann liegt ein unterer Abschlußdraht 32 des Gitterteils 30 auf einer ebenen Innenfläche des Absatzes 11 der Schale 10. Durch den zylindrischen Rand 12 ist das Gitterteil 30 achsgleich gehalten. Gitterteil 30 und Schale 10 sind durch leicht lösbare Verschlußelemente miteinander verbunden, die, weil sie beliebig und an sich bekannt sein können, nicht dargestellt sind.

Das Dach 20 besteht bei dem Ausführungsbeispiel ebenfalls aus Kunststoff. Es ist kuppelförmig ausgebildet mit einer Spitze 26. Am Dach-Randbereich ist im Anschluß an die Dachwand, nach außen gerichtet, ein ebener Absatz 21 gebildet, an dem sich ein zum Gitterteil 30 hin gerichteter zylindrischer Rand 22 anschließt. Bei dem aufgesetzten Dach 20 liegt eine Innenfläche des Absatzes auf einem Abschlußdraht 31 des Gitterteiles 30 auf. Dach 20 und Gitterteil 30 sind durch leicht montierbare Verbindungselemente 24, 25 fest verbunden.

Als Verbindungselemente sind bei dem Ausführungsbeispiel mehrere kleine Platten 24 mit einer Gewindebohrung und einer zugeordneten Schraube vorgesehen. Die Schraube 25 ist jeweils von oben her durch eine Bohrung im Absatz 21 gesteckt und in eine Gewindebohrung der Platte 24 geschraubt, wobei diese unten am Abschlußdraht 31 anliegt. Dadurch ist eine Klemmverbindung hergestellt, die der Benutzer des Käfigs in einfacher Weise selbst herstellen kann, wenn er die Einzelteile übernimmt.

Ein Lösen dieser Verbindung während der Benutzung des Käfigs ist im allgemeinen nicht erforderlich. Für die Reinigung des Käfigs genügt es, wenn Gitterteil 30 und Schale 10 gelöst werden, deren Verbindung durch andere leichter lösbare Verbindungsmittel hergestellt wird.

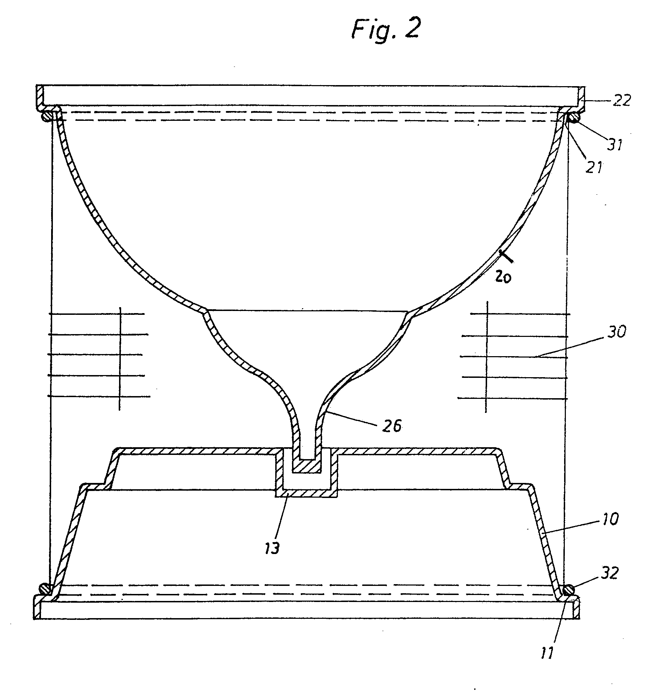

Figur 2 zeigt Schale, Gitterteil und Dach in einer verpackungsgerechten Verbindung.

Die Schale 10 ist dabei umgekehrt, sie sitzt mit ihrem zylindrischen Rand 12 auf einer Unterlage. Das Gitterteil 30 ist so weit auf die Schale 10 gesetzt, daß der untere Abschlußdraht 32 auf einer ebenen Außenfläche des Absatzes 11 liegt. Durch Anschlagen des Abschlußdrahtes 32 an der Schalenwand wird das Gitterteil 30 im wesentlichen achsgleich mit der Schale 10 zusammengehalten. Die Schale 10 ist vom Absatz bis zum Schalenboden so geformt, daß dem Aufsetzen des Gitterteiles 30 nichts im Wege steht.

Für die verpackungsgerechte Verbindung der Einzelteile nach Figur 2 wird das Dach 20 umgekehrt in den oberen Raum des Gitterteiles 30 gesetzt bis eine Außenfläche des Absatzes 21 auf dem oberen Abschlußdraht 31 zur Anlage kommt. Auch in diesem Fall ergibt sich ein Formschluß, bei der die achsgleiche Lage von Gitterteil 30 und Dach 20 durch Anschlag der Dachwand am Abschlußdraht 31 gesichert ist. Das Dach 20 ist derart geformt, daß einem vollständigen Einsetzen in das Gitterteil 30 nichts im Wege steht. Auch sind die Höhenmaße von Gitterteil, Schale und Dach so abgestimmt, daß das Gitterteil 30 Schale 10 und Dach 20 zusammen aufnehmen kann. Die Spitze 26 des Daches 20 wird von dem Innenraum der Tülle 13 aufgenommen.

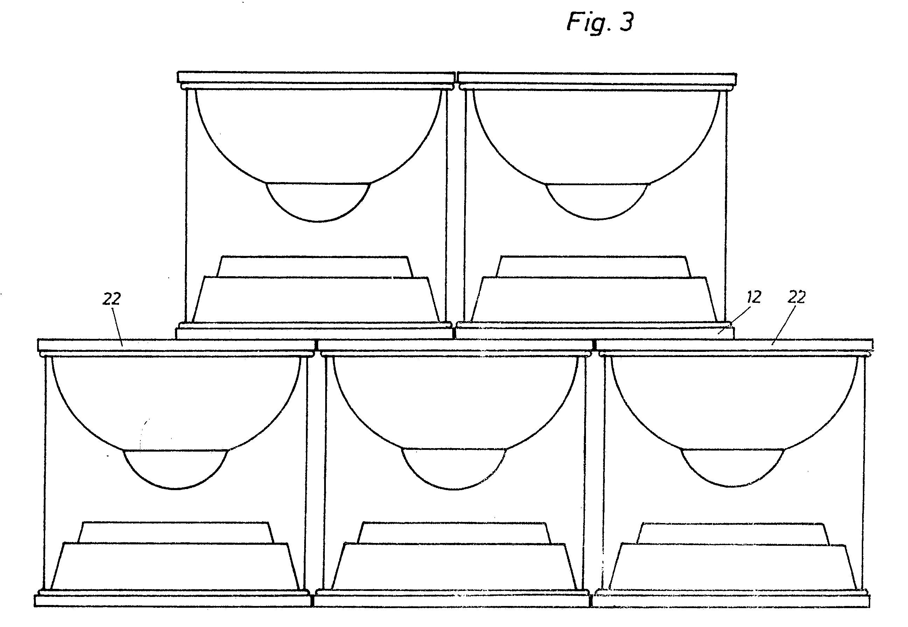

Figur 3 zeigt, wie man beliebig viele Käfige nach der Erfindung jeweils in ihrer verpackungsgerechten Verbindung stapeln kann. Dabei sind mehrere Käfige in einer unteren Reihe aufgestellt. Auf die zylindrischen Ränder 22 der Dächer dieser Käfige, die in einer Ebene liegen, können beliebig weitere Käfige aufgesetzt werden. Die Stapelung läßt sich beliebig horizontal und vertikal fortsetzen.

**Patentanspruch**

Zerlegbarer Vogelkäfig mit den nachfolgenden Merkmalen:

— er besteht aus einem Drahtgitterteil (30), aus einem Kunststoffdach (20) und aus einer Kunststoff-Bodenschale (10)

— die genannten Teile können mit Hilfe von benutzerseitig montierbaren Verbindungselementen in eine Gebrauchsstellung montiert werden, in welcher der Raum des Drahtgitterteils oben beziehungsweise unten durch das Dach (20) beziehungsweise die Schale (10) vergrößert wird,

— am Dach (20) und an der Schale (10) ist randseitig als Widerlager für das Drahtgitterteil jeweils ein Absatz (21, 11) angeformt,

— während der Grundriß des Drahtgitterteils (30) der Höhe nach gleichbleibend ist, verringert sich der Grundriß von Dach (20) und Schale (10) jeweils nach oben beziehungsweise nach unten,

— Drahtgitterteil (30), Dach (20) und Schale (10) können als Einzelteile in eine raumsparende Anordnung gebracht werden ;

gekennzeichnet durch die nachfolgenden weiteren Merkmale :

— das stabile Drahtgitterteil (30) ist oben und unten je durch einen horizontalen Abschlußdraht (31, 32) abgeschlossen,

— in der raumsparenden Anordnung der Einzelteile sind Dach (20) und Schale (10) umgestülpt in das Gitterteil (30) eingesetzt, wobei jeweils die Außenflächen der Absätze (11, 21) an den Abschlußdrähten (31, 32) des Gitterteiles (30) anliegen.

## Claim

Collapsible bird cage having the following features :

— it is comprised of a wire grating portion (30), a plastics material roof (20) and a plastics material floor tray (10)

— the said components being adapted to be assembled by means of coupling elements mountable by the user into a position of use in which the space of the wire grating component is increased at the top and bottom by the roof (20) and the tray (10) respectively,

— a shoulder (21, 11) being formed on the edge of the roof (20) and the tray (10) as an abutment for the wire grating portion,

— whilst the cross-section of the wire grating portion (30) is vertically uniform, the cross-section of roof (20) and tray (10) is reduced upwardly and downwardly respectively,

— wire grating portion (30) and roof (20) and tray (10) as individual components may be caused to assume a space-saving arrangement. ;

characterised by the subsequent further features :

— the stable wire grating portion (30) is closed at the top and below by a horizontal closure wire (31, 32),

— in the space-saving arrangement of the individual sections, the roof (20) and tray (10) are inserted inverted in the grating portion (30), whereby the external surfaces of the shoulders (11, 21) abut against the closure wires of the grating portion.

## Revendication

Cage à oiseaux démontable présentant les caractéristiques suivantes :

— elle est composée d'une partie grille en fil métallique (30), d'un toit en matière plastique (20) et d'une coquille de fond en matière plastique (10)

— les éléments précités peuvent être montés, à l'aide d'éléments d'assemblage à monter par l'utilisateur, dans une position d'utilisation dans laquelle le volume de la partie grille en fil métallique est agrandi vers le haut et vers le bas respectivement par le toit (20) et par la cuvette (10) respectivement,

— sur le toit (20) ainsi que sur la cuvette (10) est formé, le long du bord, un épaulement (21, 11) servant d'appui pour la partie grille en fil métallique,

— alors que le contour horizontal de la partie grille en fil métallique (30) est constant sur la hauteur, la section horizontale du toit (20) et de la cuvette (10) se réduit vers le haut ou vers le bas respectivement,

— la partie grille (30) en fils métalliques, le toit (20) et la cuvette (10) peuvent être placés, en tant qu'éléments, dans un arrangement peu encombrant ;

caractérisée par les autres caractéristiques suivantes :

— la partie grille en fil métallique solide (30) est terminée en haut et en bas par un fil métallique horizontal (31, 32)

— dans l'arrangement sous faible volume des pièces, le toit (20) et la cuvette (10) sont engagés dans la partie grille (30) en position retournée, les surfaces externes des épaulements (11, 21) s'appuyant sur les fils terminaux de la partie grille.

*Fig. 1*

*Fig. 2*

Fig. 3

22    12    22

0 003730